# EUROPEAN PATENT APPLICATION

(11) **EP 4 703 830 A1**
(43) Date of publication of application: **04.03.2026**
(21) Application number: 25189928.2
(22) Date of filing: 16.07.2025
(51) Int. Cl.: G05D 1/225, E01F 9/50, G08G 1/00, G05D 105/45, G05D 107/70, G05D 109/10

(54) **SYSTEM COMPRISNG A BUMP/DIP PORTION AND CONTROLLER**

(30) Priority: 28.08.2024 JP 2024146402
(71) Applicant: TOYOTA JIDOSHA KABUSHIKI KAISHA, Toyota-shi, Aichi-ken 471-8571 (JP)
(72) Inventor: IWAZAKI, Noritsugu, Toyota-shi, 471-8571 (JP); KANOU, Takeshi, Toyota-shi, 471-8571 (JP); INOUE, Go, Toyota-shi, 471-8571 (JP); OKAMOTO, Yuki, Toyota-shi, 471-8571 (JP); OHARA, Kento, Toyota-shi, 471-8571 (JP); OKA, Yuhei, Toyota-shi, 471-8571 (JP); KAKUMA, Daisuke, Toyota-shi, 471-8571 (JP); CHIBA, Hiroya, Toyota-shi, 471-8571 (JP)
(74) Representative: J A Kemp LLP

(57) **Abstract**

A system comprises: a bump/dip portion that is at least one of a bump configured to project freely from a track on which a vehicle is to run and a dip configured to be depressed freely from the track, the bump/dip portion being configured to allow the vehicle to get thereover; and a bump/dip controller that controls a height difference between the bump/dip portion and the track by operating the bump/dip portion.

## Description

### BACKGROUND

### FIELD

The present disclosure relates to a system.

### RELATED ART

Japanese Patent Application Publication (Translation of PCT Application) No. 2017-538619 discloses a technique by which a vehicle is caused to run autonomously or by remote control during a step of manufacturing the vehicle.

In some cases, a factory for manufacture, inspection, etc. of a vehicle has a track provided with a bump allowing the vehicle to get thereover. Vibration occurring on the vehicle during getting over the bump allows a driver of the vehicle to see entry or exit of the vehicle into or from a predetermined zone in the factory. However, the present inventors have found that, when the vehicle is to run by automatic driving, the bump might degrade accuracy of vehicle control. Such a problem happens not only in the case of a bump but is common to a case where the factory is provided with a dip allowing the vehicle to get thereover.

### SUMMARY

The present disclosure is feasible as the following aspects.
(1) According to one aspect of the present disclosure, a system is provided. The system comprises: a bump/dip portion that is at least one of a bump configured to project freely from a track on which a vehicle is to run and a dip configured to be depressed freely from the track, the bump/dip portion being configured to allow the vehicle to get thereover; and a bump/dip controller that controls a height difference between the bump/dip portion and the track by operating the bump/dip portion.
   In this aspect, the height difference between the bump/dip portion and the track is configured to be controllable by the operation of the bump/dip portion. Thus, by making the height difference smaller, it becomes possible to reduce accuracy degradation of vehicle control caused by the bump/dip portion.
(2) In the above-described aspect, when the vehicle is to run on the track by manned driving by a passenger on the vehicle, the bump/dip controller may control the height difference to a first difference, and when the vehicle is to run on the track by automatic driving, the bump/dip controller may control the height difference to a second difference smaller than the first difference. In this aspect, it is possible to use the bump/dip portion more effectively for letting a passenger see entry or exit of the vehicle into or from a predetermined zone when the vehicle is to run by the manned driving, and is possible to reduce accuracy degradation of the vehicle control caused by the bump/dip portion when the vehicle is to run by the automatic driving.
(3) In the above-described aspect, the bump/dip controller may control the height difference using at least one of identification information about the vehicle and step information about a step of manufacturing the vehicle. In this aspect, it is possible to control the height difference to the first difference or the second difference properly depending on the type of the vehicle or the step of manufacturing the vehicle.
(4) In the above-described aspect, the bump/dip controller may make a determination whether the automatic driving or the manned driving is to be performed, and control the height difference in response to result of the determination. This aspect makes it possible to more reliably control the height difference to the first difference when the manned driving is to be performed, and control the height difference to the second difference when the automatic driving is to be performed.
(5) In the above-described aspect, the bump/dip portion may be the bump, and the bump/dip controller may operate the bump to control a degree of projection of the bump, thereby controlling the height difference.

The present disclosure is also feasible as aspects in addition to the aspect as the system described above. For example, the present disclosure may be realized as aspects including a control device, a vehicle, a control method, a program for implementing the control method, a non-transitory recording medium storing the program, and a program product. This program product may be provided as a recording medium storing the program or as a program product distributable through a network, for example.

### BRIEF DESCRIPTION OF THE DRAWINGS

Fig. 1 is an explanatory view showing the configuration of a system according to a first embodiment;
Fig. 2 is a view explaining a bump/dip portion according to the first embodiment;
Fig. 3 is a flowchart showing a processing procedure of running control over a vehicle according to the first embodiment;
Fig. 4 is a flowchart showing a bump/dip control process according to the first embodiment;
Fig. 5 is a flowchart showing a bump/dip control process according to a second embodiment;
Fig. 6 is a view explaining a bump/dip portion according to a third embodiment;
Fig. 7 is an explanatory view showing a schematic configuration of a system according to a fourth embodiment; and
Fig. 8 is a flowchart showing a processing procedure of running control over a vehicle according to the fourth embodiment.

### DETAILED DESCRIPTION

### A. First Embodiment

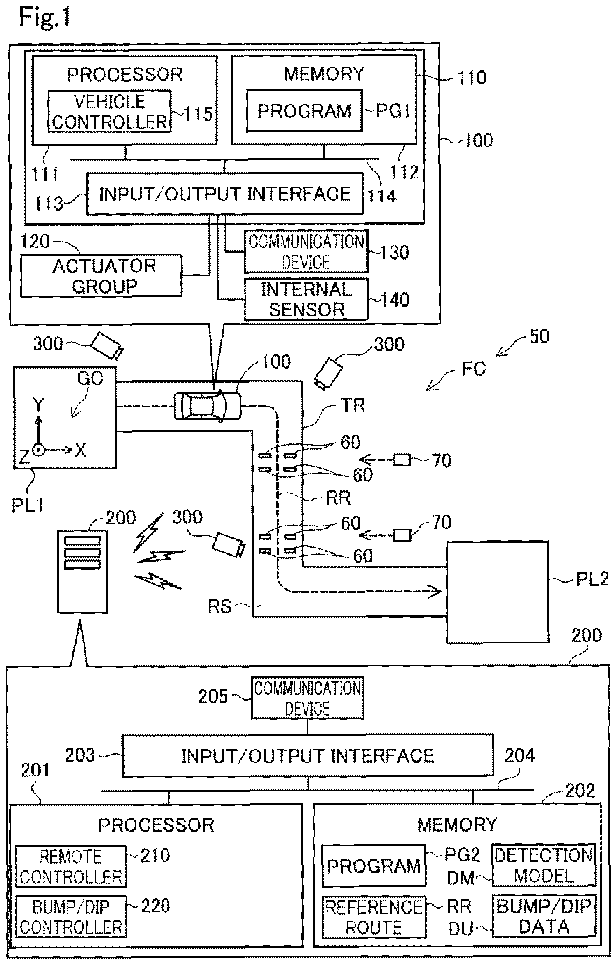

Fig. 1 is an explanatory view showing the configuration of a system 50 according to a first embodiment. The system 50 includes one or more vehicles 100, a server 200, one or more external sensors 300, and one or more bump/dip portions 60. The system 50 is configured as a control system to control the bump/dip portion 60.

The vehicle 100 may be a vehicle to run with a wheel or may be a vehicle to run with a continuous track, and may be a passenger car, a truck, a bus, a two-wheel vehicle, a four-wheel vehicle, a combat vehicle, or a construction vehicle, for example. The vehicle 100 includes a battery electric vehicle (BEV), a gasoline automobile, a hybrid automobile, and a fuel cell automobile.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving." Specifically, "manned driving" means manual driving by a passenger. Unmanned driving realized by automatic remote control or by autonomous control by the vehicle 100 is alternatively called "automatic driving." Driving by manual remote control is alternatively called "remote manual driving." The manned driving and the remote manual driving are collectively and alternatively called "manual driving" simply. In the present embodiment, the remote manual driving is not performed.

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 50 is used in a factory FC for manufacture of the vehicle 100. In the present embodiment, the reference coordinate system of the factory FC is a global coordinate system GC and a location in the factory can be expressed by X, Y, and Z coordinates in the global coordinate system GC. The factory FC has a first place PL1 and a second place PL2. The first place PL1 and the second place PL2 are connected to each other via a track TR allowing the vehicle 100 to run thereon. The factory FC is equipped with a plurality of the external sensors 300 installed along the track TR. The position of each external sensor 300 in the factory FC is adjusted in advance. The vehicle 100 moves on the track TR from the first place PL1 to the second place PL2 by the unmanned driving.

The vehicle 100 includes a vehicle control device 110 for controlling each unit of the vehicle 100, an actuator group 120 with one or more actuators to be driven under control by the vehicle control device 110, and a communication device 130 for communicating with an external device such as the server 200 via radio communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 is configured using a computer including a processor 111, a memory 112, an input/output interface 113, and an internal bus 114. The processor 111, the memory 112, and the input/output interface 113 are connected to each other via the internal bus 114 in a manner allowing bidirectional communication therebetween. The actuator group 120, the communication device 130, and the internal sensor 140 are connected to the input/output interface 113. The processor 111 executes a program PG1 stored in the memory 112 to fulfill various functions including a function as a vehicle controller 115.

The internal sensor 140 is a sensor mounted on the vehicle 100. The internal sensor 140 may include a sensor for detecting a driving state of the vehicle 100, a sensor for detecting an operating state of each unit of the vehicle 100, a sensor for detecting an environment around the vehicle 100, and a sensor for detecting an environment in the vehicle 100, for example. In the present embodiment, the internal sensor 140 includes a shift position sensor for measuring the shift position of a transmission provided in the vehicle 100, and a vehicle speed sensor for measuring the vehicle speed of the vehicle 100, for example. In addition to the shift position sensor and the vehicle speed sensor, the internal sensor 140 may include various types of sensors such as a camera, a light detection and ranging (LiDAR) unit, a millimeter wave radar, an ultrasonic sensor, a GPS sensor, a wheel speed sensor, an acceleration sensor, a gyroscopic sensor, and each type of encoder for detecting the operation of each unit of the vehicle 100, for example.

The vehicle controller 115 causes the vehicle 100 to run by controlling the actuator group 120. Independently of whether a passenger is on board the vehicle 100, the vehicle controller 115 is capable of causing the vehicle 100 to run by controlling the actuator group 120 using a running control signal received from the server 200. The running control signal is a control signal for causing the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100. If a passenger is on board the vehicle 100, the vehicle controller 115 is capable of causing the vehicle 100 to run by controlling the actuator group 120 in response to running operation by the passenger.

The external sensor 300 is a sensor located outside the vehicle 100. The external sensor 300 in the present embodiment is a sensor to capture the vehicle 100 from the outside of the vehicle 100. Specifically, the external sensor 300 is configured by a camera. The camera as the external sensor 300 captures the vehicle 100 and outputs a captured image as a detection result. The external sensor 300 includes a communication device (not shown in the drawings), and is capable of communicating with a different device such as the server 200 via wire communication or radio communication.

The one or more bump/dip portions 60 are provided on the track TR. Each of the bump/dip portions 60 is at least one of a bump configured to project freely from the track TR, and a dip configured to be depressed freely from the track TR. The bump/dip portion 60 is configured to allow the vehicle 100 to get thereover. In the present embodiment, the bump/dip portion 60 is a bump. The bump may have an any shape such as a shape with a flat upper end, a shape with a peaked upper end, or a shape with a curved upper end. The size of the bump may be determined arbitrarily as long as the bump is configured to allow the vehicle 100 to get thereover. As an example, the bump may have an arbitrary breadth that may be a width extending over a single wheel or two wheels in a vehicle width direction of the vehicle 100.

The bump/dip portion 60 is configured to be changeable in a step height of the bump/dip portion 60, specifically, in a height difference between the bump/dip portion 60 and a road surface RS of the track TR by the operation of the bump/dip portion 60. In the following, the height difference between the bump/dip portion 60 and the road surface RS will alternatively be called a "height difference of the bump/dip portion 60" or a "height difference" simply. If the bump/dip portion 60 is a bump, the height difference of the bump/dip portion 60 means a height difference between an upper end of the bump and the road surface RS. If the bump/dip portion 60 is a bump, as in the present embodiment, the height difference of the bump/dip portion 60 is changed by changing a degree of projection of the bump from the track TR, more specifically, by changing the height of the bump. Specifically, in the present embodiment, as a degree of projection of the bump/dip portion 60 as the bump becomes larger, the height difference of the bump/dip portion 60 becomes larger. The height difference of the bump/dip portion 60 may only have to be changeable at least in two steps, and may be changed in three steps or more or steplessly. In the present embodiment, the bump/dip portion 60 is configured to be changeable in a height difference within a range allowing the vehicle 100 to get over the bump/dip portion 60.

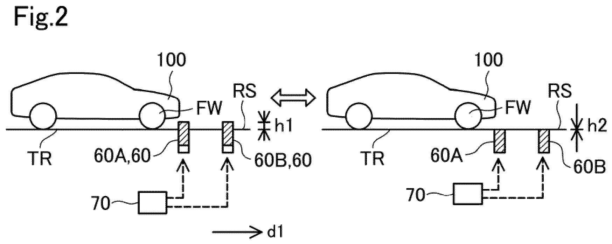

Fig. 2 is a view explaining the bump/dip portion 60 according to the present embodiment. As the bump/dip portions 60, Fig. 2 shows a bump/dip portion 60A and a bump/dip portion 60B both provided as bumps. The bump/dip portion 60B is located on a forward side in a traveling direction d1 of the vehicle 100 with respect to the bump/dip portion 60A. The traveling direction d1 is a direction in which the second place PL2 side in Fig. 1 is defined as a forward side and the first place PL1 side in Fig. 1 is defined as a backward side. The bump/dip portion 60 shown on the left side of Fig. 2 is applied if the height difference is a first difference h1. The bump/dip portion 60 shown on the right side of Fig. 2 is applied if the height difference is a second difference h2. The second difference h2 is smaller than the first difference h1. In the present embodiment, the second difference h2 is zero. Specifically, in the present embodiment, if the height difference of the bump/dip portion 60 is the second difference h2, the bump/dip portion 60 does not project or is not depressed from the road surface RS. In other embodiments, the second difference h2 may not have to be zero.

Under control by a bump/dip controller 220 described later, the height difference of the bump/dip portion 60 is controlled using a bump/dip operating unit 70. As an example, the bump/dip operating unit 70 is configured by a driving part such as a motor to generate driving force, and various types of transmission mechanisms to transmit the driving force generated by the driving part to the bump/dip portion 60. The bump/dip operating unit 70 may be configured to change the height difference of the bump/dip portion 60 by moving the bump/dip portion 60 up and down, or may be configured to change the height difference of the bump/dip portion 60 by rotating the bump/dip portion 60, for example. The bump/dip operating unit 70 may be provided commonly to a plurality of the bump/dip portions 60 or may be provided for each of the bump/dip portions 60.

If the vehicle 100 runs by the manned driving, a passenger on the vehicle 100 is allowed to see entry or exit of the vehicle 100 into or from a predetermined zone in the factory FC using vibration occurring on the vehicle 100 during getting over the bump/dip portion 60. In the illustration on the left side of Fig. 2, for example, by using vibration on the vehicle 100 caused by the bump/dip portion 60A or 60B, the passenger on the vehicle 100 is allowed to see that the vehicle 100 has entered a zone on a forward side in the traveling direction d1 with respect to the bump/dip portion 60A or 60B, or is allowed to see that the vehicle 100 has exited from a zone on a backward side in the traveling direction d1 with respect to the bump/dip portion 60A or 60B. Furthermore, in the illustration on the left side of Fig. 2, for example, using the bump/dip portions 60A and 60B in combination allows the passenger on the vehicle 100 to see that the vehicle 100 is in such a zone that a front wheel FW of the vehicle 100 is located between the bump/dip portion 60A and the bump/dip portion 60B.

The server 200 is configured using a computer including a processor 201, a memory 202, an input/output interface 203, and an internal bus 204. The processor 201, the memory 202, and the input/output interface 203 are connected to each other via the internal bus 204 in a manner allowing bidirectional communication therebetween. A communication device 205 for communicating with each type of device outside the server 200 is connected to the input/output interface 203. The communication device 205 is capable of communicating with the vehicle 100 via radio communication, and communicating with each external sensor 300 via wire communication or radio communication. The memory 202 stores various types of information including a program PG2, a reference route RR, a detection model DM, and bump/dip data DU. The processor 201 executes the program PG2 stored in the memory 202 to fulfill various functions including functions as a remote controller 210 and the bump/dip controller 220.

The remote controller 210 acquires detection result obtained by the sensor, generates a running control signal for controlling the actuator group 120 of the vehicle 100 using the detection result, and transmits the running control signal to the vehicle 100, thereby causing the vehicle 100 to run by remote control.

The bump/dip controller 220 is configured to control over the height difference of the bump/dip portion 60 by operating the bump/dip portion 60. In the present embodiment, the bump/dip controller 220 controls the bump/dip operating unit 70 to operate the bump/dip portion 60, thereby controlling the height difference of the bump/dip portion 60. More specifically, the bump/dip controller 220 causes the bump/dip operating unit 70 to operate the bump/dip portion 60 as a bump to control a degree of projection of the bump/dip portion 60, thereby controlling the height difference. In the present embodiment, the bump/dip controller 220 achieves predetermined control over the bump/dip portion 60. The predetermined control is control for controlling the height difference to the second difference h2 when the vehicle 100 is to run on the track TR by the automatic driving, and for controlling the height difference to the first difference h1 when the vehicle 100 is to run on the track TR by the manual driving by a passenger on the vehicle 100, namely, by the manned driving. In the present embodiment, under the predetermined control, the height differences of all the bump/dip portions 60 in the factory FC are controlled to the second difference h2 if the vehicle 100 is to run by the automatic driving, and the height differences of all these bump/dip portions 60 are controlled to the first difference h1 if the vehicle 100 is to run by the manned driving.

In the present embodiment, the bump/dip controller 220 controls the height difference using predetermined information for controlling the height difference. The predetermined information contains at least one of identification information about the vehicle 100 and step information about a step of manufacturing the vehicle 100. The identification information may be individuality information about the vehicle 100 or may be information indicating the model code or vehicle type of the vehicle 100, for example. The step information may be information indicating a substance of each working step in the manufacturing step or may be information indicating a progress of each working step, for example.

More specifically, the bump/dip controller 220 controls the height difference by referring to the bump/dip data DU on the basis of the predetermined information. The bump/dip data DU contains the predetermined information and height difference information associated with the predetermined information. The height difference information is information indicating the height difference. The bump/dip data DU is defined in such a manner as to allow implementation of the predetermined control. According to the bump/dip data DU, if a driving mode to be implemented in the factory FC is determined in response to the individuality, model code, vehicle type of the vehicle 100 or the like, for example, the height difference information indicating the first difference h1 is associated with identification information indicating the vehicle 100 driven by the manned driving, and the height difference information indicating the second difference h2 is associated with identification information indicating the vehicle 100 driven by the automatic driving. A vehicle driven by the manned driving may be a vehicle not equipped with a function for performing the unmanned driving. According to the bump/dip data DU, if a determination is made as to whether the automatic driving or the manual driving is to be performed in response to a substance or progress of a working step in the factory FC, for example, the height difference information indicating the first difference h1 is associated with step information indicating a working step where the manned driving is to be performed, and the height difference information indicating the second difference h2 is associated with step information indicating a working step where the automatic driving is to be performed. By defining the bump/dip data DU in this way, it becomes possible to achieve the predetermined control by simply referring to the bump/dip data DU on the basis of the predetermined information without the need of determining a driving mode directly such as the automatic driving and the manned driving, for example.

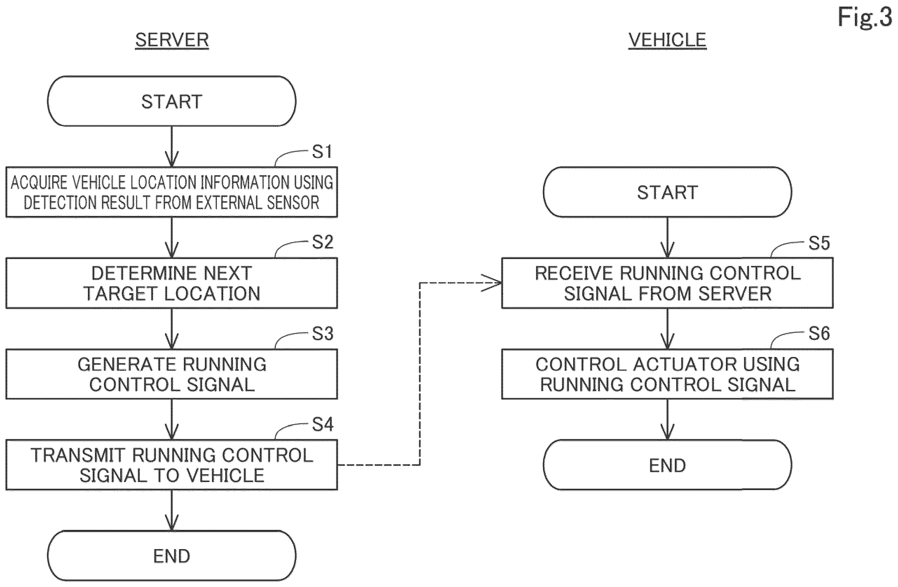

FIG. 3 is a flowchart showing a processing procedure for running control of the vehicle 100 in the first embodiment. According to the processing procedure in Fig. 3, the processor 201 of the server 200 executes the program PG2 to function as the remote controller 210. The processor 111 of the vehicle 100 executes the program PG1 to function as the vehicle controller 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

Here, if the vehicle 100 is to run by the manned driving as described above, for example, the bump/dip portion 60 shown in Figs. 1 and 2 is useful in terms of allowing a passenger to see entry or exit of the vehicle 100 into or from the predetermined zone. However, the present inventors have found that vehicle control accuracy may be degraded during the automatic driving as a result of the bump/dip portion 60. More specifically, if the bump/dip portion 60 is a bump, as in the present embodiment, in a comparatively initial stage of a period when the vehicle 100 gets over the bump/dip portion 60, it is probable that the vehicle 100 will be decelerated by the bump/dip portion 60 while the vehicle 100 climbs up the bump/dip portion 60 from the track TR to make an actual speed of the vehicle 100 lower than an expected speed. The expected speed mentioned herein corresponds to a running speed of the vehicle 100 when the vehicle 100 runs on the track TR without the bump/dip portion 60 using a running control signal. In the present embodiment, in a comparatively latter stage of the period when the vehicle 100 gets over the bump/dip portion 60, it is probable that the vehicle 100 will be accelerated by the bump/dip portion 60 while the vehicle 100 moves down from the bump/dip portion 60 to the track TR to make an actual speed of the vehicle 100 higher than the expected speed. As a result, the bump/dip portion 60 might degrade accuracy of speed control over the vehicle 100 or degrade accuracy of position control over the vehicle 100. Such influence by the bump/dip portion 60 on accuracy of the vehicle control becomes larger as the height difference of the bump/dip portion 60 becomes larger.

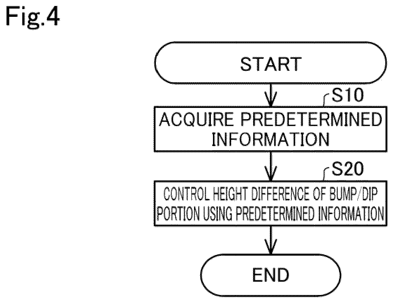

Fig. 4 is a flowchart showing a bump/dip control process according to the present embodiment. The bump/dip control process shown in Fig. 4 is performed on each vehicle 100 by the processor 201. In the present embodiment, the bump/dip control process is performed before start of running of the vehicle 100. The "start of running" means start of running of the vehicle 100 on the track TR. In other embodiments, the bump/dip control process may be performed on each vehicle 100 and on each bump/dip portion group including one or more bump/dip portions 60. In this case, the bump/dip control process on one bump/dip portion group is preferably performed before the vehicle 100 arrives at this bump/dip portion group.

In step S10 in Fig. 4, the bump/dip controller 220 acquires the predetermined information. In step S20, the bump/dip controller 220 controls the height difference of the bump/dip portion 60 using the predetermined information acquired in step S10 and the bump/dip data DU. As a result, according to the present embodiment, if the vehicle 100 is to run by the manned driving, the height difference of the bump/dip portion 60 is controlled to the first difference h1 as shown on the left side of Fig. 2. On the other hand, if the vehicle 100 is to run by the automatic driving, the height difference is controlled to the second difference h2 as shown on the right side of Fig. 2.

In the system 50 of the present embodiment described above, the height difference between the bump/dip portion 60 configured to allow the vehicle 100 to get thereover and the road surface RS of the track TR is configured to be controllable by the operation of the bump/dip portion 60. Thus, by making the height difference smaller depending on the situation, it becomes possible to reduce accuracy degradation of the vehicle control caused by the bump/dip portion 60.

According to the present embodiment, the height difference of the bump/dip portion 60 is controlled to the first difference h1 if the vehicle 100 is to run by the manned driving, and the height difference of the bump/dip portion 60 is controlled to the second difference h2 smaller than the first difference h1 if the vehicle 100 is to run by the automatic driving. Thus, it is possible to use the bump/dip portion 60 more effectively for letting a passenger see entry or exit of the vehicle 100 into or from the predetermined zone if the vehicle 100 is to run by the manned driving, and is possible to reduce accuracy degradation of the vehicle control caused by the bump/dip portion 60 if the vehicle 100 is to run by the automatic driving. This achieves more appropriate use of the bump/dip portion 60.

In the present embodiment, as the second difference h2 is zero, it is possible to more effectively reduce accuracy degradation of the vehicle control caused by the bump/dip portion 60. In particular, in the present embodiment, the plurality of bump/dip portions 60 is provided, and before start of running of the vehicle 100, the height difference of each of the bump/dip portions 60 is controlled to the first difference h1 if the vehicle 100 is to run by the manned driving and the height difference of each of the bump/dip portions 60 is controlled to zero if the vehicle 100 is to run by the automatic driving. Thus, it is possible to more reliably reduce accuracy degradation of the vehicle control caused by the bump/dip portion 60.

In the present embodiment, the height difference is controlled using at least one of the identification information about the vehicle 100 and the step information. This allows the height difference of the bump/dip portion 60 to be controlled to the first difference h1 or the second difference h2 properly depending on the type of the vehicle 100 or the step of manufacturing the vehicle 100. It is possible to control the height difference to the first difference h1 or the second difference h2 through the simple control.

### B. Second Embodiment

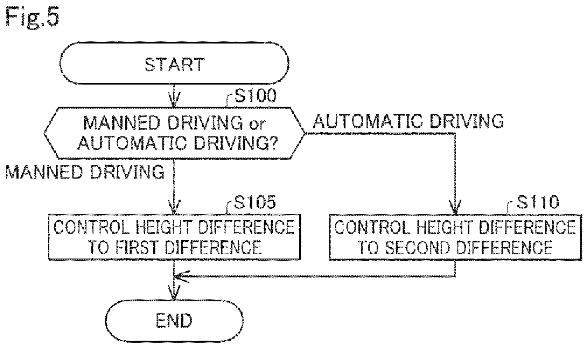

Fig. 5 is a flowchart showing a bump/dip control process according to a second embodiment. Unlike in the first embodiment, in the second embodiment, the bump/dip controller 220 performs a determination process and changes the height difference of the bump/dip portion 60 based on a determination result obtained in the determination process, thereby achieving the predetermined control. Regarding points about the system 50 of the second embodiment not to be described particularly, these points are the same as those of the first embodiment.

The determination process is a process for judging a driving mode of the vehicle 100. In the present embodiment, the bump/dip controller 220 determines in the determination process whether a driving mode to be implemented in the vehicle 100 is the manned driving or the automatic driving. In the determination process, the bump/dip controller 220 may determine a driving mode using the predetermined information described in the first embodiment, for example. In this case, the bump/dip controller 220 may determine a driving mode by referring to a database on the basis of the predetermined information, for example. The database may contain the predetermined information and a driving mode associated with the predetermined information. In the determination process, the bump/dip controller 220 may acquire mode information indicating a driving mode of each vehicle 100 and may determine a driving mode using the mode information, for example. The mode information may be input by a user of the system 50 through an input device (not shown in the drawings) configured to be communicable with the server 200, for example. The input device may be a terminal device such as a tablet terminal to be carried by the user. The user is an administrator of the system 50 or the factory FC, or a worker at the factory FC, for example. In the determination process, the bump/dip controller 220 may determine that the manned driving is to be performed on the vehicle 100 if a passenger of the vehicle 100 is detected with predetermined timing, and may determine that the automatic driving is to be performed on the vehicle 100 if a passenger of the vehicle 100 is not detected with the predetermined timing, for example. In this case, a camera or a LiDAR unit may be used for the passenger detection. The external sensor 300 or the internal sensor 140 may be used for the passenger detection.

In step S100, the bump/dip controller 220 performs the determination process. If the manned driving is determined to be performed in step S100, the bump/dip controller 220 controls the height difference of the bump/dip portion 60 to the first difference h1 in step S105. On the other hand, if the automatic driving is determined to be performed in step S100, the bump/dip controller 220 controls the height difference of the bump/dip portion 60 to the second difference h2 in step S110.

The system 50 in the second embodiment described above performs the determination process for judging whether the automatic driving or the manned driving is to be performed, and controls the height difference of the bump/dip portion 60 based on a determination result obtained in the determination process. This makes it possible to more reliably control the height difference to the first difference h1 if the manned driving is to be performed, and control the height difference to the second difference h2 if the automatic driving is to be performed.

In other embodiments, the bump/dip controller 220 may perform the bump/dip control process including the determination process once or more at a predetermined time interval after start of running of the vehicle 100 in addition to performing the same before start of running of the vehicle 100, for example. By doing so, if a driving mode of the vehicle 100 is changed after start of running of the vehicle 100, for example, it is possible to change the height difference of the bump/dip portion 60 more flexibly in response to the driving mode of the vehicle 100.

### C. Third Embodiment

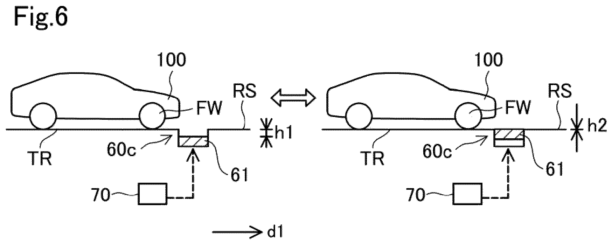

Fig. 6 is a view explaining a bump/dip portion 60c according to a third embodiment. Unlike in the first embodiment, in the third embodiment, the bump/dip portion 60c is a dip such as a recess or a groove instead of a bump. In nearly the same manner as a bump of the first embodiment, the shape or size of the dip may be determined arbitrarily as long as the bump/dip portion 60c allows the vehicle 100 to get thereover. Regarding points about the system 50 of the third embodiment not to be described particularly, these points are the same as those of the first embodiment.

If the bump/dip portion 60c is a dip, as in the present embodiment, the height difference of the bump/dip portion 60c is changed by changing the depth of the dip from the track TR. Specifically, in the present embodiment, as the depth of the bump/dip portion 60c as the dip becomes larger, the height difference of the bump/dip portion 60c becomes larger. The depth of the bump/dip portion 60c as the dip is changed by changing a height position of a bottom part 61 configured to be operable by the bump/dip operating unit 70. The bottom part 61 forms a bottom surface of the bump/dip portion 60c as the dip. In the present embodiment, the "height difference of the bump/dip portion 60c" means a height difference between the road surface RS and a lowermost end of the bottom surface formed by the bottom part 61. As in the first embodiment, the second difference h2 is zero in the present embodiment. Thus, the bump/dip portion 60c does not project or is not depressed from the road surface RS if the height difference of the bump/dip portion 60c is the second difference h2.

If the bump/dip portion 60c is a dip, as in the present embodiment, it is also possible for a passenger on the vehicle 100 to see entry or exit of the vehicle 100 into or from the predetermined zone in the factory FC using the bump/dip portion 60c. In the present embodiment, in a comparatively initial stage of a period when the vehicle 100 gets over the bump/dip portion 60c, it is probable that the vehicle 100 will be accelerated by the bump/dip portion 60c while the vehicle 100 moves down from the track TR to the bump/dip portion 60c. In a comparatively latter stage of the period when the vehicle 100 gets over the bump/dip portion 60c, it is probable that the vehicle 100 will be decelerated by the bump/dip portion 60c while the vehicle 100 climbs up from the bump/dip portion 60c to the track TR.

According to the system 50 in the third embodiment described above, it is also possible to reduce accuracy degradation of the vehicle control caused by the bump/dip portion 60c by performing the bump/dip control process shown in Fig. 4 or the bump/dip control process shown in Fig. 5.

### D. Fourth Embodiment

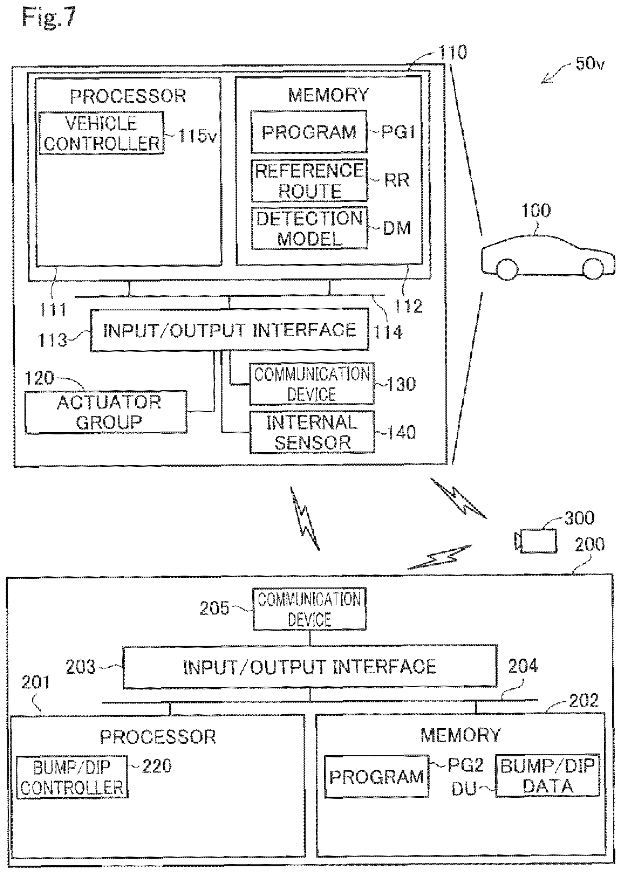

Fig. 7 is an explanatory view showing a schematic configuration of a system 50v according to a fourth embodiment. A vehicle of the present embodiment has a device configuration similar to that of the first embodiment. Thus, for the sake of convenience, the vehicle in the present embodiment will be called a vehicle 100. The vehicle 100 in the present embodiment is capable of running by autonomous control by the vehicle 100. Unless otherwise specified, the other configuration is the same as that of the first embodiment.

In the present embodiment, the communication device 130 of the vehicle 100 is capable of communicating with the external sensor 300. The processor 111 of the vehicle control device 110 executes the program PG1 stored in the memory 112 to function as a vehicle controller 115v. The vehicle controller 115v acquires output result obtained by the sensor, generates a running control signal using the output result, and outputs the generated running control signal to operate the actuator group 120, thereby allowing the vehicle 100 to run by the autonomous control. In the present embodiment, in addition to the program PG1, the detection model DM and the reference route RR are stored in advance in the memory 112.

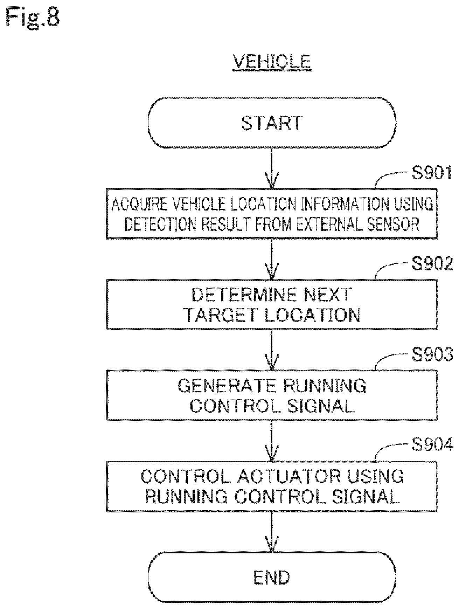

FIG. 8 is a flowchart showing a processing procedure for running control of the vehicle 100 in the fourth embodiment. According to the processing procedure in Fig. 8, the processor 111 of the vehicle 100 executes the program PG1 to function as the vehicle controller 115v.

In step S901, the processor 111 of the vehicle control device 110 acquires vehicle location information using detection result output from the camera as the external sensor 300. In step S902, the processor 111 determines a target location to which the vehicle 100 is to move next. In step S903, the processor 111 generates a running control signal for causing the vehicle 100 to run to the determined target location. In step S904, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator in a predetermined cycle. According to the system 50v in the present embodiment, it is possible to cause the vehicle 100 to run by autonomous control without controlling the vehicle 100 remotely using the server 200.

In the present embodiment, the processor 201 of the server 200 does not function as the remote controller 210 and does not generate and transmit a running control signal. In other embodiments, the processor 201 may have the function of transmitting a control signal for starting running of the vehicle 100 by the autonomous control or a control signal for stopping running of the vehicle 100 by the autonomous control to the vehicle 100, for example.

According to the system 50v of the fourth embodiment described above, it is also possible to reduce accuracy degradation of the vehicle control caused by the bump/dip portion 60 by performing the bump/dip control process shown in Fig. 4 or the bump/dip control process shown in Fig. 5.

### E. Other Embodiments

(E1) In each of the above-described embodiments, the predetermined control is performed over the bump/dip portion 60. However, the predetermined control may not be performed. For example, the bump/dip controller 220 may reduce the height difference of the bump/dip portion 60 independently of a driving mode of the vehicle 100, using the predetermined information, in a situation where the running control is desired to be performed with higher accuracy during automatic driving. The situation where the running control is desired to be performed with higher accuracy is a situation where the vehicle 100 is to run at a higher speed, a situation where the density of the vehicles 100 on the track TR is high, or a situation where a distance between the vehicles 100 on the track TR is small, for example.

When the front wheel FW of the vehicle 100 enters the bump/dip portion 60A or 60B, the bump/dip controller 220 may make the height difference of the bump/dip portion 60A or 60B larger than the height difference thereof when the front wheel FW exits from the bump/dip portion 60A or 60B. This configuration reduces accuracy degradation of the vehicle control when the vehicle 100 exits from the bump/dip portion 60A and 60B and reduces a probability that the front wheel FW will unintentionally get over the bump/dip portion 60A or 60B when the vehicle 100 enters the bump/dip portion 60A and 60B. In this configuration, the height difference of the bump/dip portion 60A and the height difference of the bump/dip portion 60B may differ from each other. As an example, the height difference of the bump/dip portion 60B may be made larger than the height difference of the bump/dip portion 60A when the front wheel FW enters a predetermined region between the bump/dip portions 60A and 60B, and the height difference of the bump/dip portion 60B may be made smaller than the height difference of the bump/dip portion 60A when the front wheel FW exits from predetermined region. By doing so, it is possible to cause the vehicle 100 to stay appropriately in such a zone that the front wheel FW is located in the predetermined region when the front wheel FW enters the predetermined region, and is possible to reduce accuracy degradation of the vehicle control when the front wheel FW exits from the predetermined region. The same type of control as described above may be applied not only to the front wheel FW but also to other wheels.

(E2) In each of the above-described embodiments, the server 200 includes the bump/dip controller 220. By contrast, a control device different from the server 200 may include the bump/dip controller 220.

In the above-described fourth embodiment, the vehicle 100 may include the bump/dip controller 220, for example. In this configuration, the bump/dip control process shown in Fig. 4 or 5 may be performed by the bump/dip controller 220 of the vehicle 100, for example. In this configuration, the bump/dip controller 220 of the vehicle 100 may perform the predetermined control by controlling the height difference of the bump/dip portion 60 to the second difference h2 before start of running and controlling the height difference of the bump/dip portion 60 to the first difference h1 after finish of the running if the own vehicle is to run by the autonomous control, and by making the height difference of the bump/dip portion 60 unchanged if the own vehicle is not to run by the autonomous control, for example. In this configuration, the server 200 may be omitted.

(E3) In each of the above-described embodiments, the plurality of bump/dip portions 60 may include a first bump/dip portion as a bump, and a second bump/dip portion as a dip, for example. As another example, one of the bump/dip portions 60 may be configured both to project and to be depressed freely from the track TR in response to the operation of this bump/dip portion 60 to function as a bump and a dip.

(E4) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(E5) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E6) In the above-described fourth embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(E7) In the above-described fourth embodiment, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the system 50v may be entirely provided at the vehicle 100. Specifically, the processes realized by the system 50v in the present disclosure may be realized by the vehicle 100 alone.

(E8) In the first to third embodiments described above, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

Specifically, in each of the above-described embodiments, the server 200 may be configured to allow implementation of the remote manual driving. Under the predetermined control, the height difference of the bump/dip portion 60 may be controlled to the first difference h1 or the second difference h2 if the vehicle 100 is to run on the track TR by the remote manual driving. In a configuration where a steering device is configured in such a manner that vibration on the vehicle 100 having occurred during getting over the bump/dip portion 60 is recreated by visual, auditory, or tactile sense using detection result obtained by the external sensor 300 or the internal sensor 140, for example, the height difference may be controlled to the first difference h1 if the vehicle 100 is to run on the track TR by the remote manual driving. This allows an external operator to see entry or exit of the vehicle 100 into or from the predetermined zone using the bump/dip portion 60.

(E9) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(E10) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E11) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(E12) In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

The disclosure is not limited to any of the embodiment and its modifications described above but may be implemented by a diversity of configurations without departing from the scope of the disclosure. For example, the technical features of any of the above embodiments and their modifications corresponding to the technical features of each of the aspects described in SUMMARY may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A system (50;50v) comprising:
a bump/dip portion (60) that is at least one of a bump configured to project freely from a track (TR) on which a vehicle (100) is to run and a dip configured to be depressed freely from the track (TR), the bump/dip portion (60) being configured to allow the vehicle (100) to get thereover; and
a bump/dip controller (220) that controls a height difference between the bump/dip portion (60) and the track (TR) by operating the bump/dip portion (60).

2. The system (50;50v) according to claim 1, wherein
when the vehicle (100) is to run on the track (TR) by manned driving by a passenger on the vehicle (100), the bump/dip controller (220) controls the height difference to a first difference, and
when the vehicle (100) is to run on the track (TR) by automatic driving, the bump/dip controller (220) controls the height difference to a second difference smaller than the first difference.

3. The system (50;50v) according to claim 2, wherein
the bump/dip controller (220) controls the height difference using at least one of identification information about the vehicle (100) and step information about a step of manufacturing the vehicle (100).

4. The system (50;50v) according to claim 2, wherein
the bump/dip controller (220) makes a determination whether the automatic driving or the manned driving is to be performed, and controls the height difference based on result of the determination.

5. The system (50;50v) according to any one of claims 1 to 4, wherein
the bump/dip portion (60) is the bump, and
the bump/dip controller (220) operates the bump to control a degree of projection of the bump, thereby controlling the height difference.
